# EUROPEAN PATENT SPECIFICATION

(11) **EP 3 337 971 B1**
(45) Date of publication and mention of the grant of the patent: **15.04.2020**
(21) Application number: 15901667.4
(22) Date of filing: 18.08.2015
(51) Int. Cl.: F03B 13/18, E02B 9/08

(54) **ARRANGEMENT IN A WAVE ENERGY RECOVERY APPARATUS**
ANORDNUNG IN EINER WELLENENERGIEGEWINNUNGSVORRICHTUNG
AGENCEMENT DANS UN APPAREIL DE RÉCUPÉRATION DE L'ÉNERGIE DES VAGUES

(43) Date of publication of application: 27.06.2018
(73) Proprietor: AW-Energy Oy, 01730 Vantaa (FI)
(72) Inventor: JÄRVINEN, Arvo, FI-01230 Vantaa (FI)
(74) Representative: Salomäki, Juha Kari Ensio
(86) International application number: PCT/FI2015/050534
(87) International publication number: WO 2017/029425

(56) References cited:
- WO-A1-2011/026173
- WO-A1-2012/053899
- WO-A1-2014/055033
- WO-A1-2015/082754
- US-A- 1 586 492
- US-A- 1 925 742
- US-A- 4 541 242

## Description

The present invention relates to an arrangement in a wave energy recovery apparatus as defined in the preamble of claim 1.

The wave energy recovery apparatus according to the invention is suited very well for instance to be used in connection with panels or flaps or essentially platelike wing elements, later called shorter only as panels, hinged with its lower edge to make a reciprocating movement caused by wave energy or tidal energy of seawater as shown for example in the international patent publication No. WO03/036081 A1. Other relevant wave energy recovery apparatuses are disclosed in US 1925742, US 1586492 and US 4541242. The wave energy or tidal energy collected is further converted underwater with a conversion unit for instance to electric energy, fresh water or hydrogen. For the sake of simplicity, only the term wave energy is later mentioned when both the wave energy and the tidal energy of seawater are meant.

According to prior art there are various types of wave energy recovery systems where the arrangements include a base and, for instance, one or more panels pivotally connected to the base to make a reciprocating or oscillating movement about a rotation axis or pivot axis in response to wave forces or tidal forces as shown for example in the international patent publications No. WO2004/097212 A1 and WO2007/125156 A1. The oscillating movement is then converted for example to electric energy with the help of a power-take-off (PTO) unit equipped with a power-take-off (PTO) machinery comprising a generator or alike as shown for example in the Finnish patent No. FI119791B.

Commonly a PTO unit of prior art wave energy conversion devices is connected more or less permanently to the reciprocating panel of the wave conversion device as is shown for example in the international patent publication No. WO2006/100436 A1. For instance, Figs. 6a-6c of the publication show a device, which has a panel attached by pivot shafts to a base portion, and a driving rod pivotally attached to each side of the panel. Each driving rod connects directly to a piston inside a hydraulic cylinder, which is pivotally attached to the base portion. In use, the panel oscillates in response to wave action, and the driving rods are driven to cause hydraulic fluid in the hydraulic cylinders to be pressurized by the action of the pistons moved by the driving rods. The driving rod is directly connected to the hydraulic cylinder without any transmission system, and therefore the mounting of the driving rod and hydraulic cylinder is possible to perform if the panel is moving. So, the panel has to be stopped first and only after that the driving rod and hydraulic cylinder can be mounted or removed. The stopping and locking of the panel makes the mounting and removing of the driving rod and hydraulic cylinder time consuming and hence also expensive operations.

The maintenance and repairs problem mentioned above has been tried to solve by a solution shown in the international patent publication No. WO2011/026173 A1. This WO publication shows a structure where one or more modular energy transfer mechanisms are connected with a pivot shaft of the wave energy recovery apparatus. The installation and removal of the modular energy transfer mechanism can be done when the panel portion of the apparatus has been lowered into its flat "survival mode" configuration as mentioned in the WO publication. This solution has several disadvantages. Firstly the modular energy transfer mechanisms are connected directly onto the pivot shaft that causes massive forces and torques. Consequently the structure of modular energy transfer mechanism is extremely prone to various fatigue breakdowns and therefore the structure of energy transfer mechanism according to the WO publication must be big and robust, and is therefore also expensive. Another problem is the installation and removal of the modular energy transfer mechanisms. It can be easy and fast only after the panel portion of the apparatus has been lowered into its flat "survival mode" configuration, but that task is extremely difficult, if not almost impossible in prevailing ocean conditions where waves never stop moving.

The object of the present invention is to eliminate the drawbacks described above and to achieve a reliable, compact, economical and efficient wave energy conversion apparatus in order to be able to capture a maximum amount of available wave or tidal energy and which apparatus is easily and in a versatile way controllable. Another object of the present invention is to make the installation, maintenance and repairs of the wave energy conversion apparatus easy and fast, and to make it possible to easily disconnect/connect the PTO arrangements from/to the other structure as one package without disturbing the functions of the other structure. Yet one object of the present invention is also to achieve an apparatus that makes it possible to easily install and change the PTO for example for maintenance and that makes it possible to easily use different kinds of PTO arrangements, which can easily be connected to the shaft end of the panel or to the panel itself. The arrangement in a wave energy conversion apparatus according to the invention is characterized by what is presented in the characterization part of claim 1. Other embodiments of the invention are characterized by what is presented in the other claims.

The solution of the invention has the significant advantage that there is no need to stop the reciprocating motion of the panel when the PTO unit is removed from the energy recovery arrangement for maintenance or repair purposes, or installed back after the maintenance or repairs. Also one advantage is that the PTO unit is a separate modular structure that is easy to lock motionless and then remove as one package and lift to the surface of the sea for the maintenance, change or repairs. Yet one more advantage is that different kind of PTO units can be used in connection with the same panel, only connection means need to be similar. Yet one advantage is that the PTO units can be installed on both sides of the panel.

In the following, the invention will be described in detail by the aid of examples by referring to the attached simplified and diagrammatic drawings, wherein
- Fig. 1: presents a simplified oblique top view of a wave energy recovery apparatus according to the arrangement of the invention,
- Fig. 2: presents in a side view and in a simplified and diagrammatic way a wave energy recovery apparatus according to Fig. 1,
- Fig. 3: presents in a side view, enlarged and in a simplified and diagrammatic way a power take-off unit (PTO) of the wave energy recovery apparatus according to Fig. 2,
- Fig. 4: presents in a top view and in a simplified and diagrammatic way another type of arrangement according to the invention,
- Fig. 5: presents in a side view and in a simplified and diagrammatic way a connecting phase of the PTO unit where the PTO unit is in its first position,
- Fig. 6: presents in a side view and in a simplified and diagrammatic way a connecting phase of the PTO unit where the PTO unit is in its second position,
- Fig. 7: presents a simplified oblique top view another type of connecting the PTO unit to the panel of the wave energy recovery apparatus according to the arrangement of the invention,
- Fig. 8: presents a simplified side view another type of connecting the PTO unit to the panel of the wave energy recovery apparatus according to the arrangement of the invention,
- Fig. 9: presents a simplified oblique top view another type of PTO unit connected to the panel of the wave energy recovery apparatus according to the arrangement of the invention,
- Fig. 10: presents a simplified oblique top view yet another type of PTO unit connected to the panel of the wave energy recovery apparatus according to the arrangement of the invention,
- Fig. 11: presents a simplified oblique side view still another type of PTO unit to be connected to the panel of the wave energy recovery apparatus according to the arrangement of the invention,
- Fig. 12: presents a simplified oblique top view the PTO unit according to Fig. 11 connected to the panel of the wave energy recovery apparatus according to the arrangement of the invention,
- Fig. 13: presents a simplified oblique top view one more type of PTO unit connected to the panel of the wave energy recovery apparatus according to the arrangement of the invention,
- Fig. 14: presents in a side view, partially cross-sectioned and in a simplified and diagrammatic way the splined ends of the shafts of the panel and the PTO unit connected together with a splined connecting bushing,
- Fig. 15: presents in a front view and in a simplified and diagrammatic way the splined shaft end of the shaft of the panel according to the arrangement of the invention,
- Fig. 16: presents in a front view and in a simplified and diagrammatic way the connecting bushing to be used wave energy recovery apparatus according to the arrangement of the invention,
- Fig. 17: presents in a side view, partially cross-sectioned and in a simplified and diagrammatic way another connecting solution to be used between the ends of the shafts of the panel and the PTO unit,
- Fig. 18: presents in a front view and in a simplified and diagrammatic way the shaft end of the shaft of the PTO unit according to the arrangement of the invention,
- Fig. 19: presents in a front view and in a simplified and diagrammatic way the shaft end of the shaft of the panel according to the arrangement of the invention,
- Fig. 20: presents in a side view, partially cross-sectioned and in a simplified and diagrammatic way yet another connecting solution to be used between the ends of the shafts of the panel and the PTO unit, and
- Fig. 21: presents in a side view and in a simplified and diagrammatic way still another connecting solution to be used between the ends of the shafts of the panel and the PTO unit.

The basic idea of the present invention is to achieve an arrangement where the power take-off (PTO) unit 5 is placed so that the PTO unit 5 can easily be mounted to its place and taken to service or replace with another PTO, and to achieve an arrangement where different technology can easily be used. In that case, for example, a PTO converting wave energy to electric energy can easily be replaced with a PTO producing fresh water or hydrogen. The fact that the PTO and the reciprocating panel 2 of the apparatus are connected through a connection mechanism 2a that does not depend on the form, size and technology of the PTO makes it possible to use different kinds of PTO units 5 for different purposes.

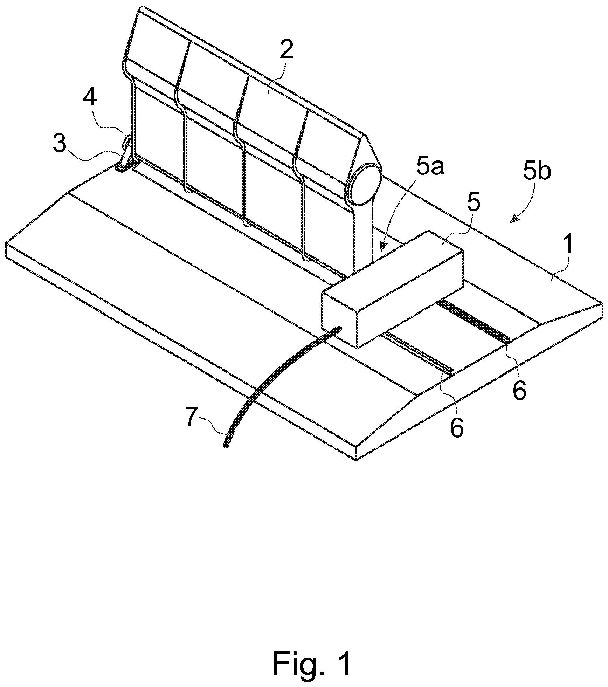

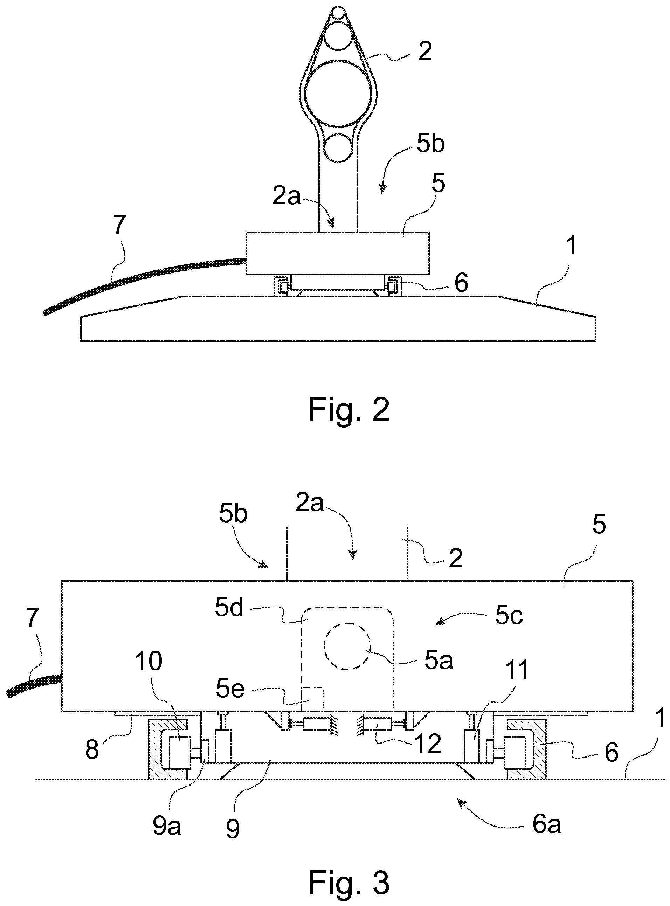

Figs. 1 and 2 present a wave energy recovery apparatus according to the invention in two different views. The wave energy recovery apparatus comprises at least a base 1, a panel 2 reciprocating about its pivot shaft 4, a power-take-off (PTO) unit 5 having a connection mechanism 2a with actuator means 5b to connect the PTO unit 5 to the pivot shaft 4 of the reciprocating panel 2. The actuator means is a remote controllable electrically and/or hydraulically operable arrangement. The PTO unit 5 is arranged to transfer a reciprocating motion of the panel 2 mechanically to the PTO machinery that can be, for instance, a machinery converting wave energy to electric energy or using wave energy to produce fresh water or hydrogen. The reciprocating motion or shorter only motion of the panel 2 and pivot shaft 4 is a back and forth rotating motion.

The reciprocating panel 2 oscillates on the base 1 back and forth with the movement of seawater for recovering kinetic energy like wave energy of seawater. At the production site the base 1 is mounted onto the bottom of the sea. On the base 1 there are at least two or possibly more supporting legs 3 that are fastened onto the base 1 so that at least one supporting leg 3 is situated at each side of the panel 2. At its upper end each supporting leg 3 supports an essentially horizontal, back and forth rotating pivot shaft 4 on which the panel 2 is mounted at its lower edge so that the panel 2 can make a reciprocating motion along the movement of the seawater, for instance along the movement of waves. The pivot shaft 4 or the main shaft can be a common shaft reaching from the first side of the panel 2 to the second side of the panel 2, or it can also be formed from several separate parts, advantageously, for instance, from two short parts, one part on each side of the panel 2. The panel 2 and the pivot shaft 4 rotate back and forth together simultaneously and at the same speed of rotation.

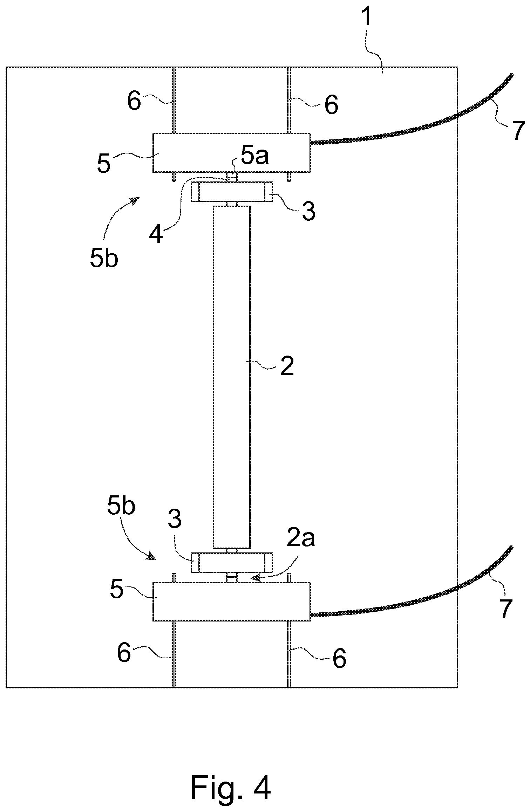

The PTO unit 5 has been placed on a side of the panel 2 and connected by its primary shaft 5a to the end of the pivot shaft 4. The primary shaft 5a is the member that transmits the motion of the panel 2 and/or its pivot shaft 4 to the machinery of the PTO unit 5. The connection and the primary shaft 5a are not shown in Fig. 1 or 2 but can be seen in Fig. 4. When connecting the PTO unit 5 and the panel 2 the PTO unit 5 is driven towards the end of the pivot shaft 4 along alignment rails 6 which are installed on the end of the base 1 to guide the primary shaft 5a of the PTO unit 5 as close to the pivot shaft 4 as possible and also as center to the pivot shaft 4 as possible. The alignment rails 6 are substantially in the same direction as the central axis of the pivot shaft 4. When removing the PTO unit 5 the alignment rails 6 are used to move the PTO unit 5 away from the end of the pivot shaft 4. A transmission line 7 is used to transmit the product of the PTO unit 5, for instance electricity, pressure, fresh water or hydrogen, to further use.

Fig. 3 presents in a side view, enlarged and in a simplified and diagrammatic way a position fine adjustment arrangement 6a of the PTO unit 5 according to Fig. 2. With the position fine adjustment arrangement 6a the PTO unit 5 is positioned so that its primary shaft 5a is precisely coaxial with the pivot shaft 4 of the panel 2. The position fine adjustment arrangement 6a comprises at least a base 8, a frame 9, advantageously four driving rolls 10, an adjustment mechanism 11 for vertical adjustment and an adjustment mechanism 12 for horizontal adjustment of the PTO unit 5.

The PTO unit 5 is placed on the base 8, which is supported by the frame 9. The driving rolls 10 are in the frame 9 and can be equipped with drive motors 9a. The adjustment mechanism 11 for vertical adjustment of the PTO unit 5 comprises, for instance, four hydraulic cylinders that work in vertical direction and are situated at each corner of the frame 9. Correspondingly the adjustment mechanism 12 for horizontal adjustment of the PTO unit 5 comprises, for instance, four hydraulic cylinders, the first two of them working in the first horizontal direction that is perpendicular to the central axis of the pivot shaft 4, and the second two of them working in the second horizontal direction that is opposite to the first horizontal direction. Instead of hydraulic cylinders the position fine adjustment mechanisms can also comprise threaded bars and motors or some other appropriate actuators.

When the end of the primary shaft 5a has been moved close to the end of the pivot shaft 4, the position fine adjustment is performed in order to center the shafts 4 and 5a with each other. The adjustment mechanism 12 for horizontal adjustment is used to move the PTO horizontally on the base 8, and the adjustment mechanism 11 for vertical adjustment is used to move the PTO unit 5 vertically and to level the PTO unit 5 in a horizontal plane. The cross section of the alignment rails 6 is substantially like a U-shaped beam and the open sides of the rails 6 are opposite to each other. The driving rolls 10 are driven on a horizontal flanges inside the rails 6.

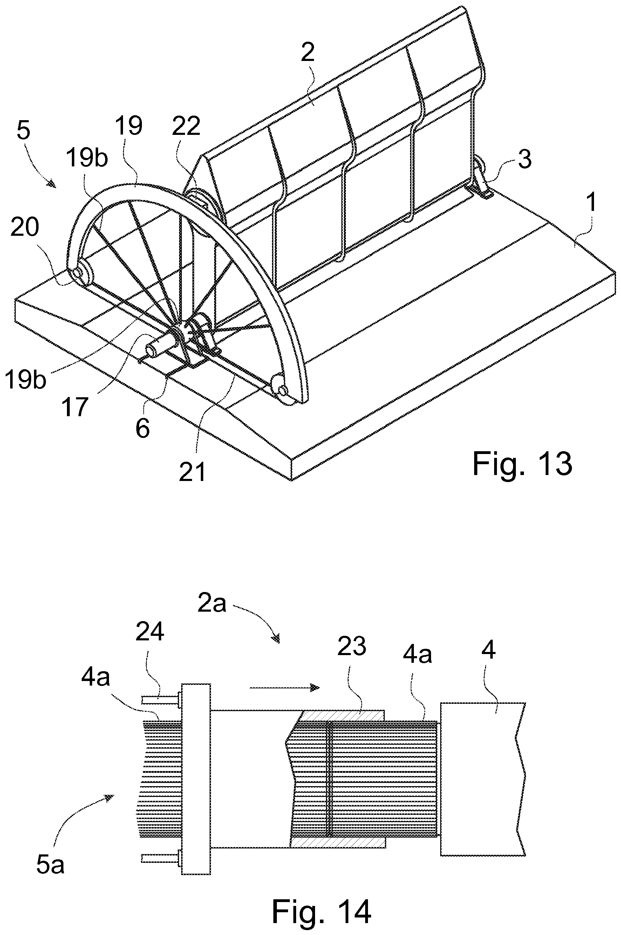

Fig. 4 presents in a top view and in a simplified and diagrammatic way another type of arrangement according to the invention. In this arrangement one PTO unit 5 is placed on both sides of the panel 2. That makes it possible to double the capacity of the wave energy recovery apparatus, or to use smaller PTO units 5. In general, all the PTO units 5 used can be placed either only on one side of the panel 2 or on both sides of the panel 2. In case two PTO units 5 are used the base 1 is equipped appropriately on both sides of the panel 2. The PTO units 5 are connected to the panel 2 by the help of the connection mechanism 2a that is substantially independent of the structure, type and purpose of use of the PTO unit 5. The structures of the connection mechanisms 2a are explained in more detailed way later, for example in connection with Figs. 14-21.

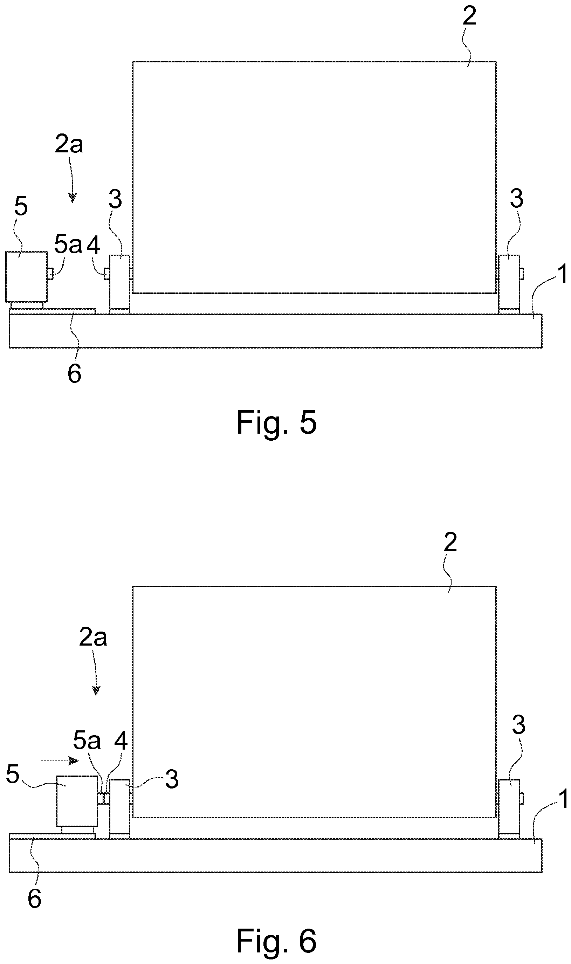

Figs. 5 and 6 present in a side view and in a simplified and diagrammatic way a connecting phase of the PTO unit 5. In Fig. 5 the PTO unit 5 is in its first position at the outer edge of the alignment rails 6, and in Fig. 6 the PTO unit 5 is in its second position at the inner edge of the alignment rails 6 where the end of the primary shaft 5a of the PTO unit 5 is as close to the end of the pivot shaft 4 as possible. When the PTO unit 5 is mounted at its place on the base 1 it is at first descended onto the outer end of the alignment rails 6 where its driving rolls 10 are set onto the alignment rails 6. Instead of using driving rolls 10 sliding surfaces can also be used. The structure of the alignment rails 6 keeps the PTO unit 5 initially in its place. After the PTO unit 5 has been installed on the alignment rails 6 it is driven along the alignment rails 6 with its driving rolls 10 towards the panel 2 as far as possible so that the end of the primary shaft 5a of the PTO unit 5 is as close to the end of the pivot shaft 4 as possible. The drive is advantageously performed with drive motors 9a but it can also be done in other ways, for example by pushing or pulling the PTO unit 5 with the buoyant force of the seawater.

When the end of the primary shaft 5a has been moved close to the end of the pivot shaft 4, the position fine adjustments are performed as explained above in order to center the shafts 4 and 5a with each other. At the end of the pivot shaft 4 there are a set of the first position means 4b, such as location sensors and at the end of the primary shaft 5a there are a set of counter position means 4c, such as location sensors which sensors 4b, 4c are arranged so that each location sensor 4b can recognize the position of its counter location sensor 4c and gives a control signal when the location sensor 4b is coaxial with its counter location sensor 4c. The location sensors 4b, 4c are part of the actuator means 5b that belong to the connecting mechanism 2a. The location sensors 4b, 4c are shown, for example, in Figs. 14, 18 and 19. With the help of the location sensors 4b, 4c the exact vertical and horizontal position of the primary shaft 5a in relation to the pivot shaft 4 is recognized. If the vertical and horizontal position of the primary shaft 5a is not correct the position fine adjustment procedure is continued until the shafts 4 and 5a are exactly coaxial.

According to the invention, the actuator means 5b comprises a synchronizing means 5c to rotate the primary shaft 5a of the PTO unit 5 back and forth without a load and to synchronize the back and forth motion of the primary shaft 5a with the motion of the panel 2 and the pivot shaft 4 before connecting the back and forth moving primary shaft 5a to the back and forth moving panel 2 or the pivot shaft 4. The synchronizing means 5c comprises an actuator 5d, such like a motor, to rotate the primary shaft 5a back and forth, and a control system 5e that is connected to the actuator 5d and to the set of the first location sensors 4b. The control system 5e is arranged to follow with the help of the set of the first location sensors 4b the positions of the counter location sensors 4c at the end of the pivot shaft 4 and to give the position signal to the actuator 5d to synchronize the speed of the primary shaft 5a with the speed of the pivot shaft 4 of the panel 2. The electric and/or hydraulic power to the synchronizing means 5c is given outside the PTO unit 5.
When the shafts 4 and 5a are exactly coaxial the primary shaft 5a is started to rotate without a load back and forth by the help of synchronizing means 5c with an outside hydraulic or electric force that is connected to the PTO unit 5. When the back and forth motion of the primary shaft 5a is synchronous with the continuous back and forth motion of the pivot shaft 4 the primary shaft 5a is connected and locked with the help of the connection mechanism 2a to the pivot shaft 4. After that the pivot shaft 4 moves the primary shaft 5a back and forth in its own rate. Because primary shaft 5a follows the motion of the pivot shaft 4 beforehand no considerable force effects exist at the moment of the connection. When the connection is completed the PTO unit 5 is activated to recover the wave energy delivered by the panel 2.

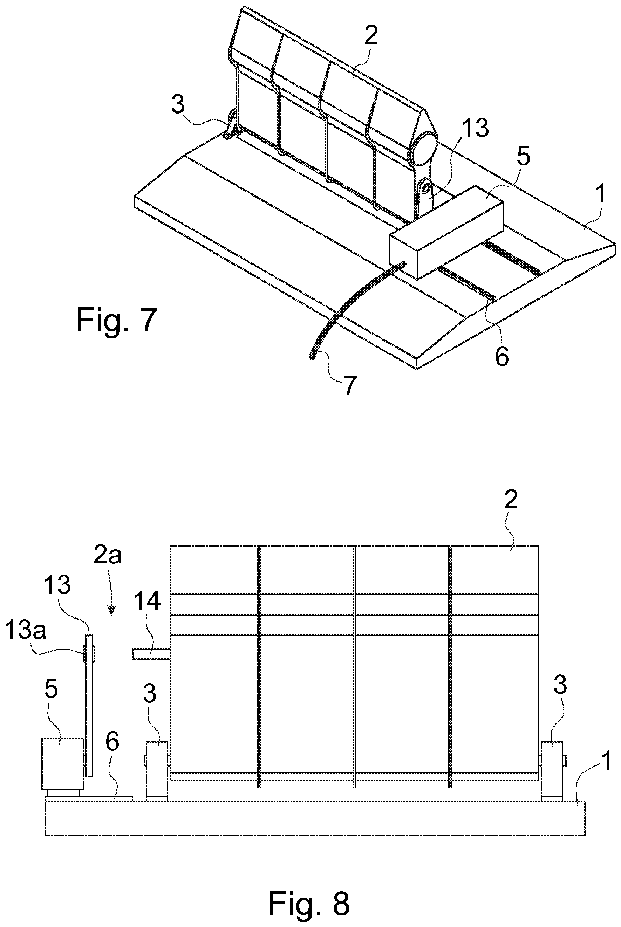

Figs. 7-13 present different kind of embodiments of the arrangement according to the invention. In the embodiment shown in Figs. 7 and 8 the primary shaft 5a of the PTO unit 5 is not connected directly to the end of the pivot shaft 4. However, the PTO unit 5 itself can be similar as explained earlier, and the primary shaft 5a has to be exactly centered with the pivot shaft 4 as in earlier embodiments before the PTO unit 5 can be connected to the panel 2. The difference to the earlier embodiments is now the fact that the connection of the PTO unit 5 is made in a different place, not directly to the end of the pivot shaft 4 but through a lever arm 13 at a certain distance from the pivot shaft 4. The connection mechanism 2a comprises at least a first coupling unit 13a, such as a hole in the free end of the lever arm 13, and the second coupling unit 14, such as a dowel or a corresponding structure at the side edge of the panel 2. The connection of the PTO unit 5 is made basically in the same way as explained above. When the shafts 4 and 5a are exactly coaxial the primary shaft 5a with the lever arm 13 is started to rotate back and forth without a load by the help of an outside hydraulic or electric force that is connected to the PTO unit 5. When the back and forth motion of the primary shaft 5a is synchronous with the continuous back and forth motion of the pivot shaft 4 the lever arm 13 is connected and locked with the help of connection mechanism 2a to the dowel 14 at the side edge of the panel 2. After that pivot shaft 4 moves the lever arm 13 and the primary shaft 5a back and forth in its own rate. Because the lever arm 13 follows the motion of the pivot shaft 4 beforehand no considerable force effects exist at the moment of the connection. When the connection is completed the PTO unit 5 is activated to recover the wave energy delivered by the panel 2. This kind of solution makes it possible to lighten, for instance, the structure of the pivot shaft 4 of the panel 2 and the bearings of the pivot shaft 4.

Another possibility to connect the lever arm 13 is the arrangement where the connection mechanism 2a is different from what is explained above. Now, dowel mechanism 14 in the panel 2 has been replaced with a controllable fastening mechanism 14, and the hole in the lever arm 13 has been replaced with an appropriate coupling mechanism 13a that can be connected with the controllable fastening mechanism 14. In this case the connection can be performed so that when the panel 2 is making its back and forth motion the lever arm 13 is at the beginning in its lowermost position substantially in a horizontal direction. When the shafts 4 and 5a are exactly coaxial and the panel 2 is in its lowermost position on the side where the lever arm 13 is and starts to rotate back the primary shaft 5a with the lever arm 13 is started to rotate behind the panel 2 in a somewhat faster speed than the panel 2. When the lever arm 13 catches the panel 2 the connection is made by the help of the controllable fastening mechanism 14. After that the lever arm 13 and the primary shaft 5a of the PTO unit 5 rotate back and forth at the rate of the panel 2, and the PTO unit 5 can be activated.

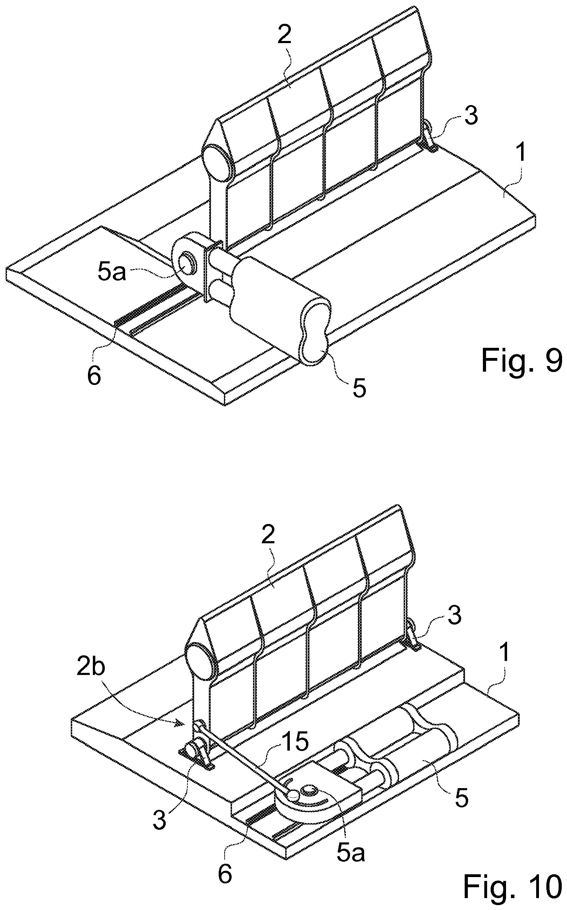

In the embodiment shown in Fig. 9 the primary shaft 5a of the PTO unit 5 is centered and connected directly to the end of the pivot shaft 4, but the internal structure of the PTO unit 5 differs from the PTO units described above. The alignment rails 6, connection mechanism 2a and the connection point are substantially similar to those explained in connection with Figs. 1-6.

In the embodiment shown in Fig. 10 the primary shaft 5a of the PTO unit 5 is not centered and connected directly to the end of the pivot shaft 4, but the internal structure of the PTO unit 5 is almost similar to the PTO unit 5 described in connection with Fig. 9. In this embodiment the connection point 2b between the panel 2 and the PTO unit 5 is also moved to a distance from the pivot shaft 4 and is situated at the side edge of the panel 2. The kinetic energy of waves is transmitted from the panel 2 to the PTO unit 5 through a transmission arm 15 whose first end is pivotally connected to the panel 2 and whose second end is pivotally connected to the contact arm of the PTO unit 5. When the panel 2 makes its back and forth motion the primary shaft 5a of the PTO unit 5 makes a back and forth semicircle motion and the two pistons make their own back and forth linear motion in turns. This kind of solution makes it also possible to lighten the structure of the pivot shaft 4 of the panel 2 and the bearings of the pivot shaft 4. In addition there are more possibilities to place the PTO unit 5.

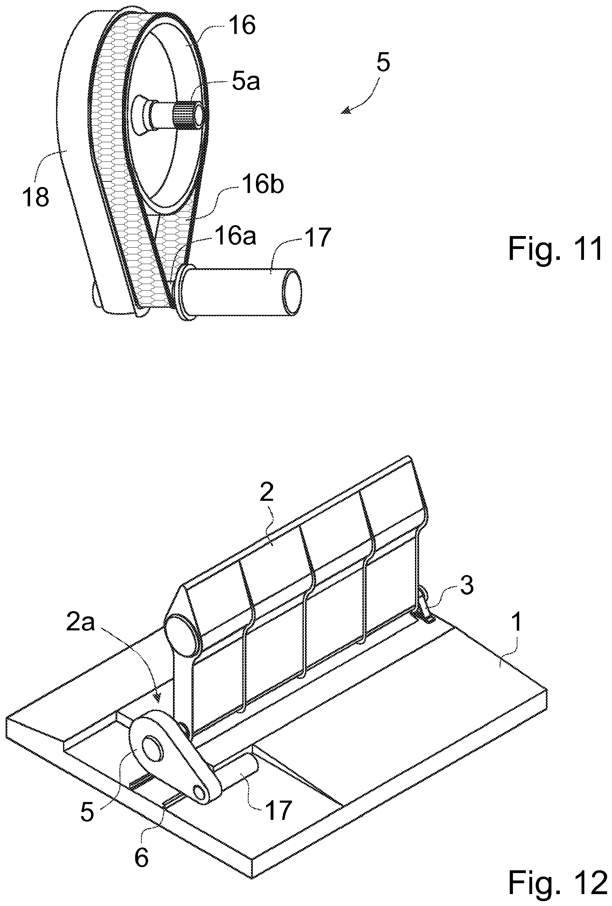

Figs. 11 and 12 present yet another embodiment of the arrangement according to the invention. In this case the PTO unit 5 comprises a high transmission ratio that is achieved by the first belt pulley 16 whose center shaft acts as the primary shaft 5a of the PTO unit 5 and by the second belt pulley 16a whose shaft is connected, for instance, with the generator 17 to produce electric energy. The diameter of the first belt pulley 16 is greater than the diameter of the second belt pulley 16a and the belt pulleys 16, 16a are connected with a transmission belt 16b. The PTO unit 5 comprises also a housing 18 that supports and protects the structure.

The connection of the PTO unit 5 is made basically in the same way as explained above, for example in connection with Figs. 1-8. When the shafts 4 and 5a are exactly coaxial the primary shaft 5a is started to rotate back and forth without a load by the help of an outside hydraulic or electric force that is connected to the PTO unit 5. When the back and forth motion of the primary shaft 5a is synchronous with the continuous back and forth motion of the pivot shaft 4 the primary shaft 5a is connected and locked with the help of connection mechanism 2a to the pivot shaft 4. After that the pivot shaft 4 moves the primary shaft 5a back and forth in its own rate. Because the primary shaft 5a follows the motion of the pivot shaft 4 beforehand no considerable force effects exist at the moment of the connection. When the connection is completed the PTO unit 5 is activated to recover the wave energy delivered by the panel 2. This kind of solution makes it possible to improve the amount of captured energy.

Figs. 13 presents yet another embodiment of the arrangement according to the invention. In this case the PTO unit 5 comprises a generator 17, a semicircle arc 19, a support hub 19a substantially in the center point of the arc 19 and a group of supporting rods 19b connecting the arc 19 to the hub 19a. The two ends of the arc 19 are directed downwards and each end comprises a deflection sheave 20 to guide a transmission element 21 such as a wire rope or chain that is arranged to form an endless loop. The transmission element 21 has connected to the primary shaft 5a of the generator 17 and arranged to run from its first end under the first deflection sheave 20, over the arc19 along the arc 19 and under the second deflection sheave 20 and finally back to its first end. In addition the transmission element 21 is fastened to the panel 2 to move along with the panel 2. The fastening point 22 is in the side edge of the panel 2 a distance away from the pivot shaft 4 of the panel 2. When the panel 2 makes its reciprocating motion the transmission element 21 moves with the panel 2 and being connected to the primary shaft 5a of the generator 17, simultaneously rotates the primary shaft 5a of the generator 17. This kind of solution makes it also possible to lighten the structure of the pivot shaft 4 of the panel 2 and the bearings of the pivot shaft 4, and in addition this kind of solution makes it possible to improve the amount of captured energy.

Figs. 14-21 present different ways and embodiments to connect the PTO unit 5 and the pivot shaft 4 of the panel 2 together. In the embodiment shown in Figs. 14-16 the connecting mechanism 2a comprises at least splined ends of the pivot shaft 4 and the primary shaft 5a, a splined connecting bushing 23 and actuators 24, such as hydraulic cylinders, that are arranged to move the connecting bushing 23 axially on the splined ends of the pivot shaft 4 and the primary shaft 5a. The splined ends of the pivot shaft 4 and the primary shaft 5a are of the same size and form having external axial splines 4a. The connection is made with the connecting bushing 23 that has internal axial splines 23a that correspond to the splines 4a. Also the internal diameter of the connecting bushing 23 corresponds to the external diameter of the splined ends of the pivot shaft 4 and the primary shaft 5a so that the connecting bushing 23 can be moved axially to cover both the splined ends of the pivot shaft 4 and the primary shaft 5a. The movement is performed, for instance, by the help of a actuators 24. The ends of the pivot shaft 4 and the primary shaft 5a comprise location sensors 4b and 4c as mentioned above. By the help of the location sensors 4b, 4c both the shafts 4, 5a are centered with each other as explained above.

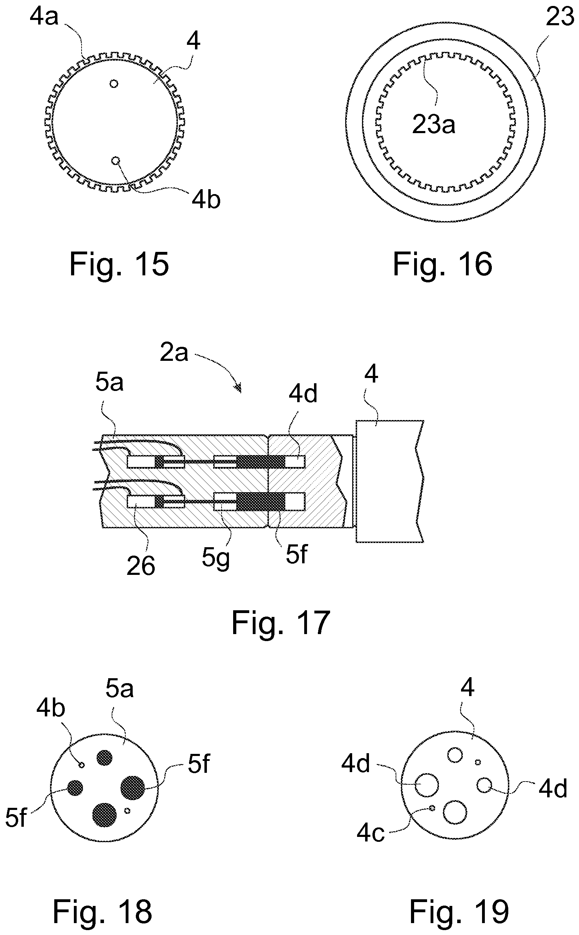

In the embodiment shown in Figs. 17-19 the connecting mechanism 2a comprises at least a group of borings 4d in the end of the pivot shaft 4 and a group of the dowels 5f inserted in borings 5g in the end of the primary shaft 5a of the PTO unit 5. The dowels 5f are pushed and pulled back and forth by the help of one or more actuators 26, such as hydraulic cylinders inserted in the end of the primary shaft 5a. The locations, sizes and forms of the borings 4d and dowels 5f correspond to each other so that when connecting the PTO unit 5 to the pivot shaft 4 the dowels 5f can be inserted to the borings 4d, but only when the sensors 4b inform that the borings 4d and dowels 5f are at a correct position with each other. Here the dowels 5f are or the same diameter in pairs but they all can also be of the same diameter or different diameter with each other.

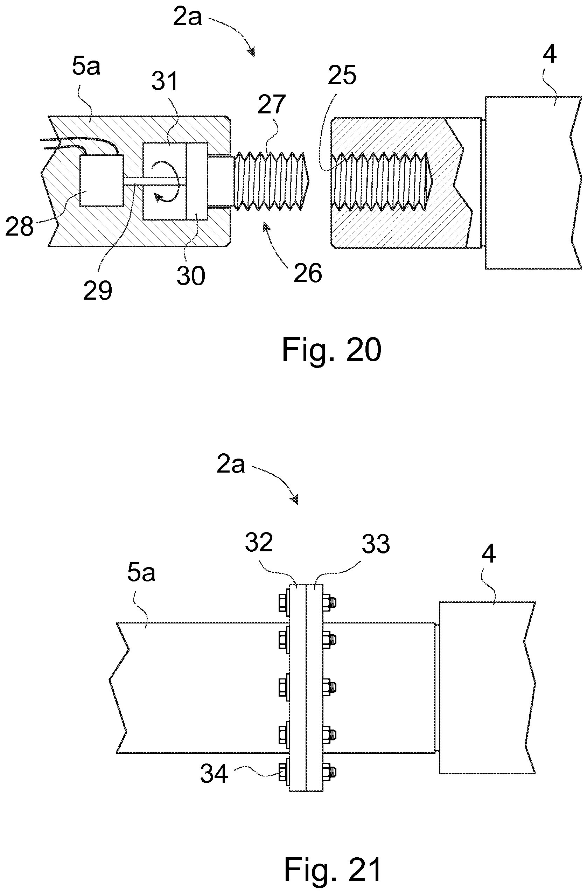

In the embodiment shown in Figs. 20 the connecting mechanism 2a comprises at least an internal screw thread 25 inside the end of the pivot shaft 4 and a connecting piece 26 in the end of the primary shaft 5a having an external screw thread 27 that corresponds to the screw thread 25. The connecting piece 26 is axially locked by a flange 30 in the space 31 inside the end of the primary shaft 5a so that it cannot come out of the space 31. The connecting mechanism 2a further comprises an actuator arrangement 28, such as an electric or a hydraulic arrangement that is arranged to rotate the connecting piece 26 through a rotating arm 29 while the ends of the shafts 4 and 5a are connected. When rotating the connecting piece 26 draws the primary shaft 5a of the PTO unit 5 firmly connected to the pivot shaft 4 of the panel.

In the embodiment shown in Figs. 21 the connecting mechanism 2a comprises at least two flanges, the first flange 32 in the end of the primary shaft 5a of the PTO unit 5 and the second flange 33 in the end of the pivot shaft 4 of the panel 2. Advantageously the flanges 32, 33 are substantially similar to each other having fastening holes near their outer circumference and fastening elements 34, such as bolts and nuts inserted to the fastening holes to connect the primary shaft 5a of the PTO unit 5 and the pivot shaft 4 of the panel 2 firmly together.

It is common to all of the embodiments of the invention that the PTO unit 5 or in many cases the primary shaft 5a of the PTO unit 5 is connected to the moving panel 2 or to its pivot shaft 4 while the panel 2 is moving back and forth caused by the kinetic energy of the waves. The connection and also disconnection is made with the help of the connection mechanism 2a that is remote controlled from outside the PTO unit 5. The connection mechanism 2a is associated with the actuator means 5b that comprises the synchronizing means 5c with the actuator 5d, such like a motor, to rotate the primary shaft 5a back and forth at the same speed as the pivot shaft moves, and with location sensors 4b, 4c to center the primary shaft 5a with the pivot shaft 4.

It is obvious to the person skilled in the art that the invention is not restricted to the examples described above but that it may be varied within the scope of the claims presented below. Thus, for example, the structure and positions of the PTO unit can be different from what is presented.

It is also obvious to the person skilled in the art that the structure of the connecting mechanism can differ from what is presented above. Instead of having actuator mechanisms in the primary shaft of the PTO unit the actuator mechanisms can as well be in the end of the pivot shaft of the panel.

## Claims

1. A wave energy recovery apparatus comprising at least a base (1), a reciprocating panel (2), a pivot shaft (4) for the reciprocating panel (2), a control system, a power-take-off (PTO) unit (5) with a primary shaft (5a) to convert kinetic energy of waves or tidal currents to another type of energy, and a connection mechanism (2a) to connect the PTO unit (5) to the panel (2) or to the pivot shaft (4) and to disconnect the PTO unit (5) from the panel (2) or from the pivot shaft (4) and the apparatus comprises actuator means (5b) to connect the primary shaft (5a) of the PTO unit (5) either to the back and forth moving panel (2) or its pivot shaft (4) while the panel (2) and the pivot shaft (4) are reciprocating, **characterized in that** the actuator means (5b) comprises synchronizing means (5c) to rotate the primary shaft (5a) of the PTO unit (5) back and forth without a load and to synchronize the back and forth motion of the primary shaft (5a) with the motion of the panel (2) and the pivot shaft (4) before connecting the back and forth moving primary shaft (5a) to the back and forth moving panel (2) or the pivot shaft (4).

2. A wave energy recovery apparatus according to claim 1, **characterized in that** the actuator means (5b) comprises position means (4b, 4c, 11, 12) to center the primary shaft (5a) of the PTO unit (5) and the pivot shaft (4) of the panel (2) with each other.

3. A wave energy recovery apparatus according to claim 1 and 2, **characterized in that** a set of the first position means (4b) is at the end of the primary shaft (5a) and a set of the counter position means (4c) is at the end of the pivot shaft (4), and that the synchronizing means (5c) comprises an actuator (5d), such like a motor, to rotate the primary shaft (5a) back and forth and a control system (5e) that is connected to the actuator (5d) and to the set of the first position means (4b), and which control system (5e) is arranged to follow with the help of the set of the first position means (4b) the position of the set of the counter position means (4c) at the end of the pivot shaft (4) and to synchronize the speed of the primary shaft (5a) with the speed of the pivot shaft (4) of the panel (2).

4. A wave energy recovery apparatus according to any of the claims above, **characterized in that** the apparatus comprises alignment rails (6) on the base (1) and the actuator means (5b) comprises drive means (9a) to drive the PTO unit (5) along the alignment rails (6) towards the end of the pivot shaft (4) and away from the end of the pivot shaft (4).

5. A wave energy recovery apparatus according to any of the claims above, **characterized in that** the actuator means (5b) is a remote controllable electrically and/or hydraulically operable arrangement.

6. A wave energy recovery apparatus according to any of the claims above, **characterized in that** the end of the pivot shaft (4) and the end of the primary shaft (5a) have external axial splines (4a) and the connection mechanism (2a) comprises a connecting bushing (23) that has internal axial splines (23a) that correspond to the splines (4a), and that in order to connect the primary shaft (5a) with the pivot shaft (4) the bushing (23) is arranged to be moved axially by the help of a actuators (24) situated in the PTO unit (5).

7. A wave energy recovery apparatus according to any of the claims 1-6 above, **characterized in that** the end of the pivot shaft (4) comprises a group of borings (4d) and connection mechanism (2a) comprises a group of the dowels (5f) inserted in borings (5g) in the end of the primary shaft (5a) of the PTO unit (5), and that in order to connect the primary shaft (5a) with the pivot shaft (4) the dowels (5f) are arranged to be pushed to the borings (4d) by the help of one or more actuators (26).

8. A wave energy recovery apparatus according to any of the claims 1-5 above, **characterized in that** the end of the pivot shaft (4) contains an internal screw thread (25) inside the end of the pivot shaft (4) and the connection mechanism (2a) comprises a connecting piece (26) in the end of the primary shaft (5a) having an external screw thread (27) that corresponds to the internal screw thread (25), and that in order to connect the primary shaft (5a) with the pivot shaft (4), and that in order to connect the primary shaft (5a) with the pivot shaft (4) the screw thread (27) of the connecting piece (26) is arranged to be screwed into the internal screw thread (25) of the pivot shaft (4) by the help of an actuator arrangement (28).

9. A wave energy recovery apparatus according to any of the claims 1-5 above, **characterized in that** the primary shaft (5a) of the PTO unit (5) comprises a first flange (32) in the end of the primary shaft (5a) and the pivot shaft (4) of the panel (2) comprises a second flange (33) in the end of the pivot shaft (4), and the flanges (32, 33) comprise fastening holes through which the primary shaft (5a) and pivot shaft (4) are arranged to be connected with each other by the help of fastening elements (34) which are arranged to be fastened either manually or by the help of an actuator.

10. A wave energy recovery apparatus according to any of the claims 1-5 above, **characterized in that** the PTO unit (5) is arranged to be connected through a lever arm (13) to the end of the panel (2) at a distance from the pivot shaft (4).

11. A wave energy recovery apparatus according to claim 11, **characterized in that** the panel (2) has a dowel mechanism (14) to connect the lever arm (13) with the panel (2).

12. A wave energy recovery apparatus according to any of the claims 1-5 above, **characterized in that** the PTO unit (5) comprises a generator (17) that run by a transmission element (21), such as a wire rope or chain, that is fastened at its first point to the side edge of the panel (2) a distance away from the pivot shaft (4) and at its second point to the primary shaft (5a) of the generator (17), and that is arranged to form a loop moving back and forth with the panel (2) and while moving back and forth is arranged to rotate the primary shaft (5a) of the generator (17).

13. A wave energy recovery apparatus according to any of the claims above, **characterized in that** one PTO unit (5) is situated at each side of the panel (2).

14. A wave energy recovery apparatus according to any of the claims above, **characterized in that** the apparatus is arranged to convert wave energy either to electric energy or to use wave energy to produce fresh water or hydrogen.

## Patentansprüche

1. Vorrichtung zur Rückgewinnung von Wellenenergie, die mindestens eine Basis (1), eine hin- und hergehende Platte (2), eine Schwenkwelle (4) für die hin- und hergehende Platte (2), ein Steuersystem, eine Zapfwelleneinheit (5) mit einer Primärwelle (5a) zur Umwandlung der kinetischen Energie von Wellen oder Gezeitenströmungen in eine andere Energieart umfasst, und einen Verbindungsmechanismus (2a), um die Zapfwelleneinheit (5) mit der Platte (2) oder der Schwenkwelle (4) zu verbinden und die Zapfwelleneinheit (5) von der Platte (2) oder der Schwenkwelle (4) zu trennen, und die Vorrichtung umfasst eine Betätigungseinrichtung (5b), um die Primärwelle (5a) der Zapfwelleneinheit (5) entweder mit der sich vorwärts und rückwärts bewegenden Platte (2) oder ihrer Schwenkwelle (4) zu verbinden, während sich die Platte (2) und die Schwenkwelle (4) hin und her bewegen, **dadurch gekennzeichnet, dass** die Betätigungseinrichtung (5b) eine Synchronisiereinrichtung (5c) aufweist, um die Primärwelle (5a) der Zapfwelleneinheit (5) ohne Last vor und zurück zu drehen und um die Hin- und Herbewegung der Primärwelle (5a) mit der Bewegung der Platte (2) und der Schwenkwelle (4) zu synchronisieren, bevor die sich vor und zurück bewegende Primärwelle (5a) mit der sich vor und zurück bewegenden Platte (2) oder der Schwenkwelle (4) verbunden wird.

2. Vorrichtung zur Rückgewinnung von Wellenenergie nach Anspruch 1, **dadurch gekennzeichnet, dass** das Betätigungsmittel (5b) Positionsmittel (4b, 4c, 11, 12) umfasst, um die Primärwelle (5a) der Zapfwelleneinheit (5) und die Schwenkwelle (4) der Platte (2) miteinander zu zentrieren.

3. Vorrichtung zur Rückgewinnung von Wellenenergie nach Anspruch 1 und 2, **dadurch gekennzeichnet, dass** sich ein Satz der ersten Positionsmittel (4b) am Ende der Primärwelle (5a) und ein Satz der Gegen-Positionsmittel (4c) am Ende der Schwenkwelle (4) befindet, und dass die Synchronisiereinrichtung (5c) ein Stellglied (5d), wie einen Motor, umfasst, um die Primärwelle (5a) hin und her zu drehen, und ein Steuersystem (5e), das mit dem Stellglied (5d) und dem Satz der ersten Positionsmittel (4b) verbunden ist, und wobei das Steuersystem (5e) so angeordnet ist, dass es mit Hilfe des Satzes der ersten Positionsmittel (4b) der Position des Satzes der Gegen-Positionsmittel (4c) am Ende der Drehwelle (4) folgt und Geschwindigkeit der Primärwelle (5a) mit der Geschwindigkeit der Drehwelle (4) der Platte (2) synchronisiert.

4. Vorrichtung zur Rückgewinnung von Wellenenergie nach einem der vorherigen Ansprüche, **dadurch gekennzeichnet, dass** die Vorrichtung Ausrichtungsschienen (6) an der Basis (1) umfasst und die Betätigungseinrichtung (5b) eine Antriebseinrichtung (9a) zum Antreiben der Zapfwelleneinheit (5) entlang der Ausrichtungsschienen (6) in Richtung des Endes der Schwenkwelle (4) und weg vom Ende der Schwenkwelle (4) umfasst.

5. Vorrichtung zur Rückgewinnung von Wellenenergie nach einem der vorherigen Ansprüche, **dadurch gekennzeichnet, dass** das Betätigungsmittel (5b) eine fernsteuerbare elektrisch und/oder hydraulisch betätigbare Anordnung ist.

6. Vorrichtung zur Rückgewinnung von Wellenenergie nach einem der vorherigen Ansprüche, **dadurch gekennzeichnet, dass** das Ende der Schwenkwelle (4) und das Ende der Primärwelle (5a) äußere axiale Keilnuten (4a) aufweisen und der Verbindungsmechanismus (2a) eine Verbindungsbuchse (23) umfasst, die innere axiale Keilnuten (23a) aufweist, die den Keilnuten (4a) entsprechen, und dass zur Verbindung der Primärwelle (5a) mit der Schwenkwelle (4) die Buchse (23) so angeordnet ist, dass sie mit Hilfe eines in der Zapfwelleneinheit (5) angeordneten Stellgliedes (24) axial bewegt werden kann.

7. Vorrichtung zur Rückgewinnung von Wellenenergie nach einem der Ansprüche 1-6, **dadurch gekennzeichnet, dass** das Ende der Schwenkwelle (4) eine Gruppe von Bohrungen (4d) und der Verbindungsmechanismus (2a) eine Gruppe von Dübeln (5f) umfasst, die in Bohrungen (5g) am Ende der Primärwelle (5a) der Zapfwelleneinheit (5) eingesetzt sind, und dass zur Verbindung der Primärwelle (5a) mit der Schwenkwelle (4) die Dübel (5f) so angeordnet sind, dass sie mit Hilfe eines oder mehrerer Aktuatoren (26) in die Bohrungen (4d) geschoben werden können.

8. Vorrichtung zur Rückgewinnung von Wellenenergie nach einem der Ansprüche 1-5, **dadurch gekennzeichnet, dass** das Ende der Drehwelle (4) ein Innengewinde (25) innerhalb des Endes der Drehwelle (4) enthält und der Verbindungsmechanismus (2a) ein Verbindungsstück (26) am Ende der Primärwelle (5a) mit einem Außengewinde (27) umfasst, das dem Innengewinde (25) entspricht, und dass zur Verbindung der Primärwelle (5a) mit der Schwenkwelle (4), und dass zur Verbindung der Primärwelle (5a) mit der Schwenkwelle (4) das Schraubgewinde (27) des Verbindungsstücks (26) mit Hilfe einer Betätigungsanordnung (28) in das Innengewinde (25) der Schwenkwelle (4) einschraubbar ist.

9. Vorrichtung zur Rückgewinnung von Wellenenergie nach einem der Ansprüche 1-5, **dadurch gekennzeichnet, dass** die Primärwelle (5a) der Zapfwelleneinheit (5) einen ersten Flansch (32) am Ende der Primärwelle (5a) und die Schwenkwelle (4) der Platte (2) einen zweiten Flansch (33) am Ende der Schwenkwelle (4) aufweist, und die Flansche (32, 33) Befestigungslöcher aufweisen, durch die die Primärwelle (5a) und die Schwenkwelle (4) so angeordnet sind, dass sie mit Hilfe von Befestigungselementen (34) miteinander verbunden werden können, die so angeordnet sind, dass sie entweder manuell oder mit Hilfe eines Stellglieds befestigt werden können.

10. Vorrichtung zur Rückgewinnung von Wellenenergie nach einem der Ansprüche 1-5, **dadurch gekennzeichnet, dass** die Zapfwelleneinheit (5) so angeordnet ist, dass sie durch einen Hebelarm (13) mit dem Ende der Platte (2) in einem Abstand von der Schwenkwelle (4) verbunden werden kann.

11. Vorrichtung zur Rückgewinnung von Wellenenergie nach Anspruch 11, **dadurch gekennzeichnet, dass** die Platte (2) einen Dübelmechanismus (14) zur Verbindung des Hebelarms (13) mit der Platte (2) aufweist.

12. Vorrichtung zur Rückgewinnung von Wellenenergie nach einem der Ansprüche 1-5, **dadurch gekennzeichnet, dass** die Zapfwelleneinheit (5) einen Generator (17) umfasst, der durch ein Übertragungselement (21), wie ein Drahtseil oder eine Kette, läuft, das an seinem ersten Punkt an der Seitenkante der Platte (2) in einem Abstand von der Schwenkwelle (4) und an seinem zweiten Punkt an der Primärwelle (5a) des Generators (17) befestigt ist, und so angeordnet ist, dass sie eine Schleife bildet, die sich mit der Platte (2) hin und her bewegt und während der Hin- und Herbewegung die Primärwelle (5a) des Generators (17) dreht.

13. Vorrichtung zur Rückgewinnung von Wellenenergie gemäß einem der vorherigen Ansprüche, **dadurch gekennzeichnet, dass** eine Zapfwelleneinheit (5) auf jeder Seite der Platte (2) angeordnet ist.

14. Vorrichtung zur Rückgewinnung von Wellenenergie gemäß einem der vorherigen Ansprüche, **dadurch gekennzeichnet, dass** die Vorrichtung so angeordnet ist, dass sie Wellenenergie entweder in elektrische Energie umwandelt oder Wellenenergie zur Erzeugung von Frischwasser oder Wasserstoff verwendet.

## Revendications

1. Appareil de récupération de l'énergie des vagues comprenant au moins une base (1), un panneau de déplacement alternatif (2), un arbre de pivot (4) pour le panneau de déplacement alternatif (2), un système de commande, une unité de prise de force (PTO) (5) avec un arbre principal (5a) pour convertir de l'énergie cinétique des vagues ou des courants de marée en un autre type d'énergie, et un mécanisme de raccordement (2a) pour raccorder l'unité de PTO (5) au panneau (2) ou à l'arbre de pivot (4) et pour déconnecter l'unité de PTO (5) du panneau (2) ou de l'arbre de pivot (4) et l'appareil comprend un moyen actionneur (5b) pour raccorder l'arbre principal (5a) de l'unité de PTO (5) au panneau se déplaçant vers l'arrière et l'avant (2) ou son arbre de pivot (4) alors que le panneau (2) et l'arbre de pivot (4) se déplacent alternativement, **caractérisé en ce que** le moyen actionneur (5b) comprend un moyen de synchronisation (5c) pour faire tourner l'arbre primaire (5a) de l'unité de PTO (5) vers l'arrière et l'avant sans une charge et pour synchroniser le mouvement vers l'arrière et l'avant de l'arbre principal (5a) avec le mouvement du panneau (2) et l'arbre de pivot (4) avant le raccordement de l'arbre principal (5a) se déplaçant vers l'arrière et l'avant au panneau (2) se déplaçant vers l'arrière et l'avant ou l'arbre de pivot (4).

2. Appareil de récupération de l'énergie des vagues selon la revendication 1, **caractérisé en ce que** le moyen actionneur (5b) comprend un moyen de position (4b, 4c, 11, 12) pour centrer l'arbre principal (5a) de l'unité de PTO et l'arbre de pivot (4) du panneau (2) l'un avec l'autre.

3. Appareil de récupération de l'énergie des vagues selon la revendication 1 et 2, **caractérisé en ce qu'**un ensemble du premier moyen de position (4b) est à l'extrémité de l'arbre principal (5a) et un ensemble du contre-moyen de position (4c) est à l'extrémité de l'arbre de pivot (4), et que le moyen de synchronisation (5c) comprend un actionneur (5d), tel qu'un moteur, pour faire tourner l'arbre principal (5a) vers l'arrière et l'avant et un système de commande (5e) qui est raccordé à l'actionneur (5d) et à l'ensemble du premier moyen de position (4b), et lequel système de commande (5e) est agencé pour suivre à l'aide de l'ensemble du premier moyen de position (4b) la position de l'ensemble du contre-moyen de position (4c) à l'extrémité de l'arbre de pivot (4) et pour synchroniser la vitesse de l'arbre principal (5a) avec la vitesse de l'arbre de pivot (4) du panneau (2).

4. Appareil de récupération de l'énergie des vagues selon l'une quelconque des revendications précédentes, **caractérisé en ce que** l'appareil comprend des rails d'alignement (6) sur la base (1) et le moyen actionneur (5b) comprend un moyen d'entraînement (9a) pour entraîner l'unité de PTO (5) le long des rails d'alignement (6) vers l'extrémité de l'arbre de pivot (4) et loin de l'extrémité de l'arbre de pivot (4).

5. Appareil de récupération de l'énergie des vagues selon l'une quelconque des revendications précédentes, **caractérisé en ce que** le moyen actionneur (5b) est un agencement télécommandable actionnable hydrauliquement et/ou électriquement.

6. Appareil de récupération de l'énergie des vagues selon l'une quelconque des revendications précédentes, **caractérisé en ce que** l'extrémité de l'arbre de pivot (4) et l'extrémité de l'arbre principal (5a) présentent des cannelures axiale externes (4a) et le mécanisme de raccordement (2a) comprend une douille de raccordement (23) qui présente des cannelures axiales internes (23a) qui correspondent aux cannelures (4a), et qu'afin de raccorder l'arbre principal (5a) à l'arbre de pivot (4) la douille (23) est agencée pour être déplacée axialement à l'aide d'un actionneur (24) situé dans l'unité de PDF (5).

7. Appareil de récupération de l'énergie des vagues selon l'une quelconque des revendications précédentes 1 à 6, **caractérisé en ce que** l'extrémité de l'arbre de pivot (4) comprend un groupe de forages (4d) et un mécanisme de raccordement (2a) comprend un groupe de chevilles (5f) insérées dans des forages (5g) dans l'extrémité de l'arbre principal (5a) de l'unité de PTO (5) et qu'afin de raccorder l'arbre principal (5a) à l'arbre de pivot (4) les chevilles (5f) sont agencées pour être poussées jusqu'aux forages (4d) à l'aide d'un ou plusieurs actionneurs (26).

8. Appareil de récupération de l'énergie des vagues selon l'une quelconque des revendications précédentes 1 à 5, **caractérisé en ce que** l'extrémité de l'arbre de pivot (4) contient un filet de vis interne (25) à l'intérieur de l'extrémité de l'arbre de pivot (4) et le mécanisme de raccordement (2a) comprend une pièce de raccordement (26) dans l'extrémité de l'arbre principal (5a) présentant un filet de vis externe (27) qui correspond au filet de vis interne (25), et qu'afin de raccorder l'arbre principal (5a) à l'arbre de pivot (4), et qu'afin de raccorder l'arbre principal (5a) à l'arbre de pivot (4) le filet de vis (27) de la pièce de raccordement (26) est agencé pour être vissé dans le filet de vis interne (25) de l'arbre de pivot (4) à l'aide d'un agencement actionneur (28).

9. Appareil de récupération de l'énergie des vagues selon l'une quelconque des revendications précédentes 1 à 5, **caractérisé en ce que** l'arbre principal (5a) de l'unité de PTO (5) comprend une première bride (32) dans l'extrémité de l'arbre principal (5a) et l'arbre de pivot (4) du panneau (2) comprend une seconde bride (33) dans l'extrémité de l'arbre de pivot (4), et les brides (32, 33) comprennent des trous de fixation au travers desquels l'arbre principal (5a) et l'arbre de pivot (4) sont agencés pour être raccordés l'un à l'autre à l'aide d'éléments de fixation (34) qui sont agencés pour être fixés manuellement ou à l'aide d'un actionneur.

10. Appareil de récupération de l'énergie des vagues selon l'une quelconque des revendications précédentes 1 à 5, **caractérisé en ce que** l'unité de PTO (5) est agencée pour être raccordée au travers d'un bras de levier (13) à l'extrémité du panneau (2) à une distance de l'arbre de pivot (4).

11. Appareil de récupération de l'énergie des vagues selon la revendication 11, **caractérisé en ce que** le panneau (2) présente un mécanisme à cheville (14) pour raccorder le bras de levier (13) au panneau (2).

12. Appareil de récupération de l'énergie des vagues selon l'une quelconque des revendications précédentes 1 à 5, **caractérisé en ce que** l'unité de PTO (5) comprend un générateur (17) qui fonctionne par un élément de transmission (21), tel qu'un câble ou chaîne métallique, qui est fixé en son premier point à l'arête latérale du panneau (2) à une distance de l'arbre de pivot (4) et en son second point à l'arbre principal (5a) du générateur (17), et qui est agencé pour former une boucle se déplaçant vers l'arrière et l'avant avec le panneau (2) et tout en se déplaçant vers l'arrière et l'avant est agencé pour faire tourner l'arbre principal (5a) du générateur (17).

13. Appareil de récupération de l'énergie des vagues selon l'une quelconque des revendications précédentes, **caractérisé en ce qu'**une unité de PTO (5) est située au niveau de chaque côté du panneau (2).

14. Appareil de récupération de l'énergie des vagues selon l'une quelconque des revendications précédentes, **caractérisé en ce que** l'appareil est agencé pour convertir de l'énergie des vagues en énergie électrique ou pour utiliser de l'énergie des vagues pour produire de l'eau douce ou de l'hydrogène.
